**Europäisches Patentamt**

**European Patent Office**

**Office européen des brevets**

(19)

(11) Publication number : **0 331 758 B1**

(12)

# EUROPEAN PATENT SPECIFICATION

(45) Date of publication of patent specification :
06.12.95 Bulletin 95/49

(51) Int. Cl.⁶ : **G06K 7/10, G06K 19/06**

(21) Application number : **88907820.0**

(22) Date of filing : **05.09.88**

(86) International application number :
**PCT/JP88/00895**

(87) International publication number :
**WO 89/02132 09.03.89 Gazette 89/06**

(54) **DATA CODE ON A CODE SHEET AND APPARATUS OF RECOGNIZING THE CODE.**

(30) Priority : **04.09.87 JP 221768/87**

(43) Date of publication of application :
**13.09.89 Bulletin 89/37**

(45) Publication of the grant of the patent :
**06.12.95 Bulletin 95/49**

(84) Designated Contracting States :
**AT BE CH DE FR IT LI LU NL SE**

(56) References cited :
**FR-A- 1 272 313**
**JP-A- 4 810 951**
**JP-A- 5 373 026**
**JP-A-57 191 788**
**JP-A-61 234 479**
**JP-U- 5 824 853**

(56) References cited :
**PATENT ABSTRACTS OF JAPAN, vol. 9, no. 16 (P-329)[1739], 23rd January 1985; & JP-A-59 163 673 (NIPPON DENKI K.K.) 14-09-1984**
**PAT. ABST. OF. JAPAN, vol.2, no.108, Sept. 8, 1978, p.5731 E 78, & JP-A-53 73026**

(73) Proprietor : **TOMIOKA, Makoto**
**2-3-23, Soya**
**Ichikawa-shi**
**Chiba 272 (JP)**

(72) Inventor : **TOMIOKA, Makoto**
**2-3-23, Soya**
**Ichikawa-shi**
**Chiba 272 (JP)**

(74) Representative : **Sturt, Clifford Mark et al**
**MARKS & CLERK**
**57-60 Lincoln's Inn Fields**
**London WC2A 3LS (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a data code on a code sheet and apparatus for reading said data code.

Hitherto, conventional bar codes have been used for printing a code onto various products and for use in all aspects of manufacturing and at point of sale retail stores. The bar code system comprises a plurality of parallel, aligned bars, each bar having a given width to represent a particular number, or character.

The bar code is read by illuminating the code with a beam of light and the reflected light is read by an optical sensor. The sensor may be, for example, of a fixed beam type in which the object having the code printed thereon is moved in front of it. Alternatively, the sensor may be of the moving type whereby the object having the code printed thereon is fixed and the sensor is moved across the code.

The reflected light forms analogue signals which is converted by the sensor to digital signals and then these signals are image processed by a microprocessor to extract the relevant information. This results in the optical sensor being relatively complex and expensive. Since the bar widths are used to represent numbers or characters, the bar code must be printed with great accuracy to ensure that the code accurately represents the information required. Furthermore, a user merely looking at the code is unable to decipher the information written thereon since the naked eye is unable to accurately determine the widths of the bars.

A code has been proposed, which is described in pending PCT application no. PCT/JP87/0007 (= EP-A-0 299 066, cited under Art. 54(3)). The code comprises at least one unit being divided into at least two regions having substantially similar dimensions, whereby each characteristic of the code has a particular arrangement of shaded and/or blank regions. One known disadvantage with this code is that only decimal notation such as numerals 0-9 may be represented. Another known disadvantage with this code is that the orientation of each unit can not be determined and hence inaccurate data may be extracted.

In addition, one well known code is binary notation, which is especially used in computing or microprocessing fields. However, most users are not used to working in binary, but are highly proficient in using decimal notation. Conversion from decimal to binary and vice versa is not easily computed manually and is usually done by a machine. Hitherto, there are no known codes which easily allow a user to convert between decimal and binary notation.

We acknowledge the disclosure in FR-A-1272313 which forms the basis of the preamble of claims 1 and 5. It describes the machine-controlled sorting of packages marked with a square shaded code. Signals representing the binary state (shaded or not shaded) of each region of the code are decoded and used directly to perform the required function.

Further, Patent Abstracts of Japan, vol. 2, no. 108, Sept. 8, 1978, p. 5731 E 78 & JP-A- 53-73026 discloses a binary code for use on facsimile reproduced sheets, which has a square unit comprising four square regions each of which is shaded to represent respective binary numbers 1, 2, 4 and 8.

An object of the present invention is to provide a data code and apparatus for reading such a data code which alleviates the aforementioned disadvantages.

According to the present invention there is provided a data code as defined in Claim 1, and apparatus as defined in Claim 5 for reading that code.

Embodiments of the present invention will now be described, by way of example only, with reference to the accompanying drawings, in which:

Figure 1 is a schematic representation of an embodiment the data code, in which each unit of the data code corresponds to the respective decimal, hexidecimal or binary notation;

Figure 2 illustrates each region of the data code representing binary or decimal notation as shown in Figure 1;

Figure 3 illustrates examples of the data code according to Figure 1;

Figure 4 illustrates a positional arrangement of the data code shown in Figure 1;

Figure 5 schematically represents variations of a unit;

Figure 6 schematically illustrates the data code representing each letter of the Roman Alphabet;

Figure 7 illustrates units of a data code according to an embodiment of the present invention;

Figure 8 illustrates each unit being coupled to means for distinguishing the orientation of the units of the embodiment shown in figure 6;

Figure 9 illustrates examples of the preferred embodiment shown in Figure 6 having known symbols printed thereon;

Figure 10 illustrates a data code and apparatus for reading thereof according to a second preferred embodiment of the present invention:

Figure 11 is a schematic block diagram of the apparatus shown in figure 10;

Figure 12 is a schematic diagram of the apparatus according to a third preferred embodiment;

Figure 13 is a schematic block diagram of the circuit of the apparatus shown in figure 12.

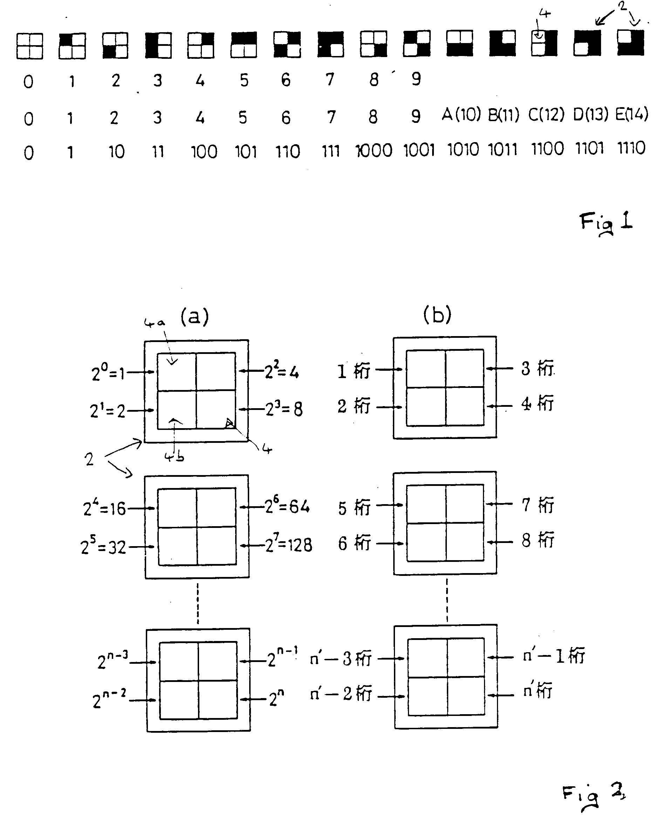

An embodiment of the data code is shown in figure 1 and comprises a number of units 2 each being divided into four equal regions 4. Each of the regions 4 of any unit 2 may be shaded, or printed manually or by a printing machine, to create a unique arrangement of shaded and blank regions to define a particular unit and hence a particular characteristic of the data code. Each of the decimal numbers 0 to 9 are represented by a particular combination of blank and shaded regions.

Each of the units shown in figure 1 comprises four regions, however two or more regions may be used for each unit. Furthermore. each region may form a rectangular, circular or triangular shape, but each of the regions must have substantially similar dimensions for a particular data code.

Each of the units 2 of the data code is used to represent decimal, hexidecimal or binary notation as shown in figure 1. Here each region represents a column of binary notation starting with the lowest order column, 1, and successive columns 2, 4, 8. Hence numerals in decimal or other binary notation can be represented. If, respective regions for each unit always represent the same column then the value of a unit can be determined at a glance.

Figure 2 further illustrates the data code being used to represent decimal, hexidecimal or binary notation. The decimal numbers 1, 2, 4 and 8 may be printed onto the data code sheet before any one of the regions are shaded. These numbers are directly related to binary or hexidecimal notation since each region 4 is used to represent a column of notation, for example the 1, 10, 100, 1000 in binary notation. For example, 4a represents column $2^0$, equivalent to the decimal or hexidecimal number 0 or the binary number 1; b represents column $2^1$, equivalent to the decimal or hexidecimal number 2 or the binary number 10; region 4c represents column $2^2 = 4 = 100$; and similarly region d represents $2^3 = 8 = 1000$. A number of units may be used to represent larger numbers. Accordingly each unit 2 may be used to represent decimal, hexidecimal, or binary notation.

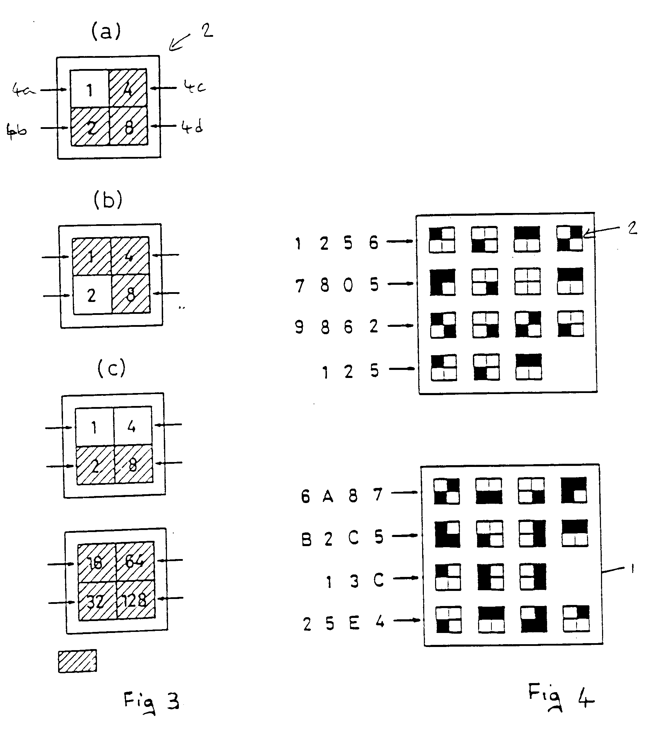

As shown in figure 3 the unit 2 may also have decimal notation printed on each of the regions 4. Thus in figure 3a regions 4b, 4c, and 4d are shaded thus indicating that the unit represents the decimal number 14 ( since 2 + 4 + 8 = 14) and the binary number 1110. Similarly the unit illustrated in figure 3b represents the decimal number 13 and the binary number 1101 and the unit in figure 3c represents the decimal number 250 and the binary number 11111010. Thus the data code easily enables a user to identify a binary or a decimal notation merely viewing the data code.

Computers are generally based on hexidecimal notation and the data code is applicable to such notation and therefore directly compatable with computers.

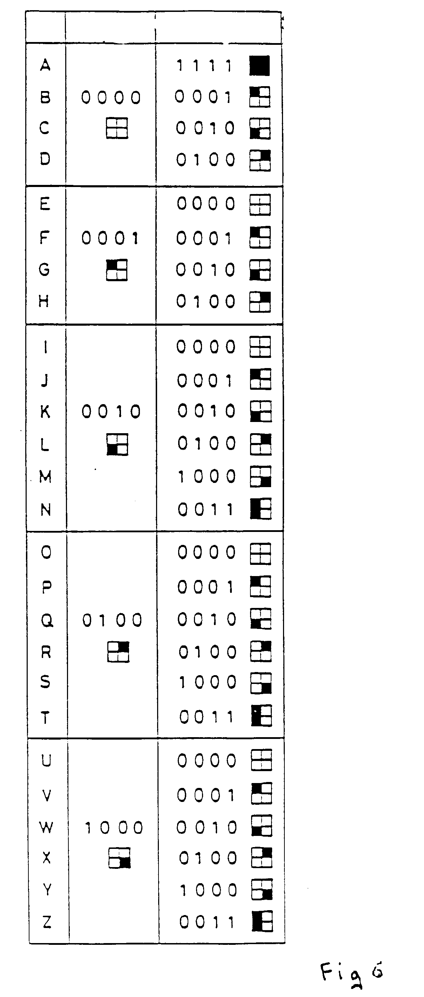

Figure 4 illustrates possible positional arrangements of the data code in decimal notation or hexidecimal notation when printed on a sheet 1.

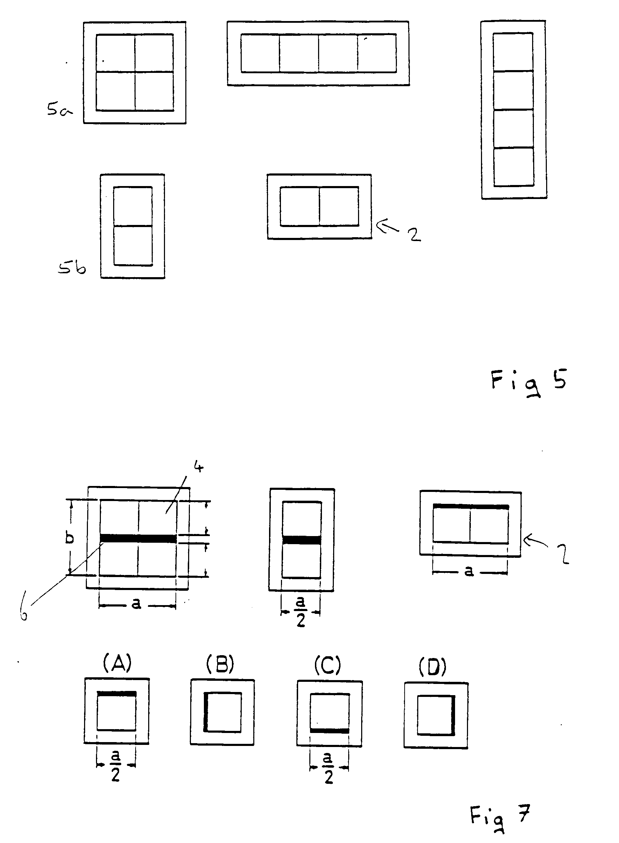

Figure 5 illustrates a number of different types of units which may be used in the data code but the present invention is not limited just to these types of units. Any one of these units may be used to form a data code applicable to the notation which the code is representing. For example, a notation requiring 6 regions for each unit may be denoted by units 5a and 5b. Accordingly. the following types of notation can be represented by a minimum number of regions or bits:

| NOTATION TYPES | MINIMUM NUMBER OF REGIONS OR BITS |
|---|---|
| Decimal notation type | 4 bits |
| Roman alphabet (Capitals),decimal and punctuation marks | 6 bits |
| Japanese kana characters and punctuation marks | 7 bits |
| Roman characters, including capitals and lower case, kana characters, decimals and punctuation marks | 8 bits |
| Frequently used ideographs, kana characters, Roman characters and punctuation marks | 12 or 16 bits |
| Morse signals | 6 bits |
| Braille | 6 bits |

For example, figure 6 illustrates the Roman Alphabet of capitals in terms of binary notation and the data code. For example, the letter N may be represented by the binary notation 00100011 or by the 2 units. The data code therefore facilitates reading, understanding and remembering codes of the Roman alphabet in capitals.

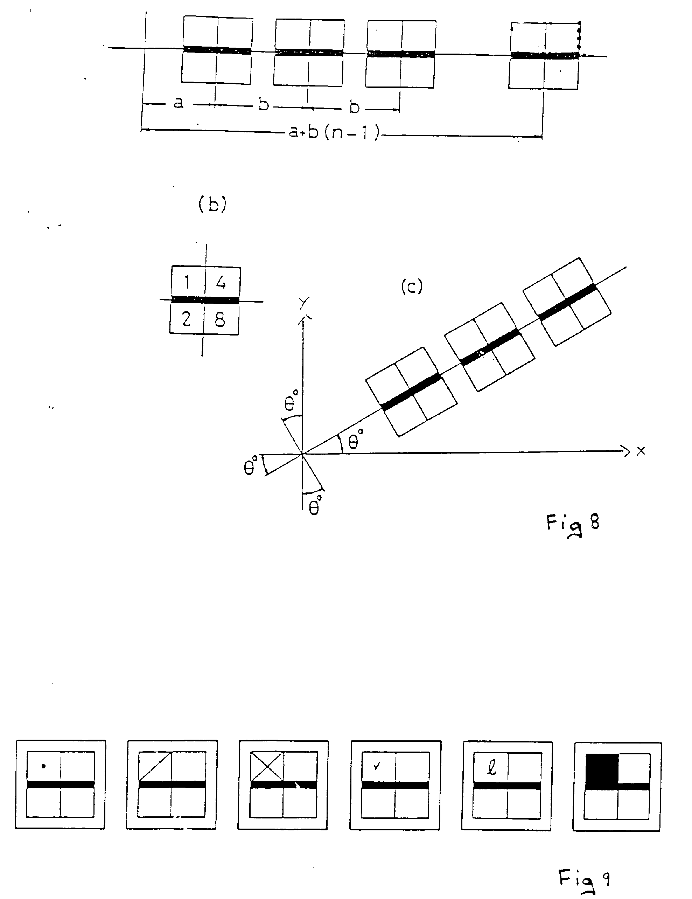

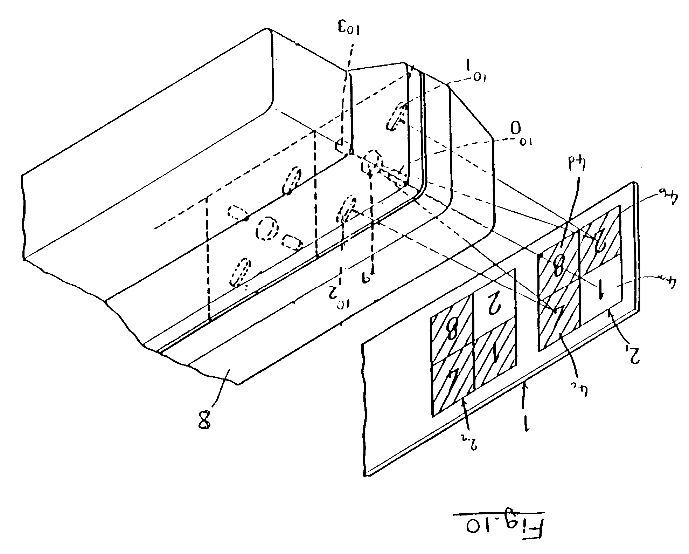

Figure 7 illustrates a data code according to an embodiment. The regions 4 of each of the units 2 include means for distinguishing the orientation of the unit, such as a bar 6. The bar 6 facilitates reading of the code and enables the code to be correctly positioned. If the sensor reads the first column whilst viewing position a, then the sensor will recognise that the centre of the unit is not aligned with the origin of its two dimensional axis and thus will adjust the reading of the columns until it is aligned. As shown in figure 8, the bar 6 should be aligned along the X axis having the centre of each unit aligned with the origin of the two dimensional axis in the sensor. However, this embodiment enables the data code to be read easily even if the data code is placed at an angle θ to a reader. For example, in figure 8c alignment of the data code using the bar 6 enables the sensor to compensate for the code being at an angle θ.

Each unit of the data code may also have known characters or punctuation marks printed in some or all of the regions as shown in figure 9. This further enables the data code to be easily read and interpreted.

The data code facilitates reading and understanding of decimal. hexidecimal and binary notation in both education and industry. The data code may be written by hand and may be used to operate electronic devices thereby making such devices more accessable. Furthermore, the data code may be used as an interface language between characters of different languages.

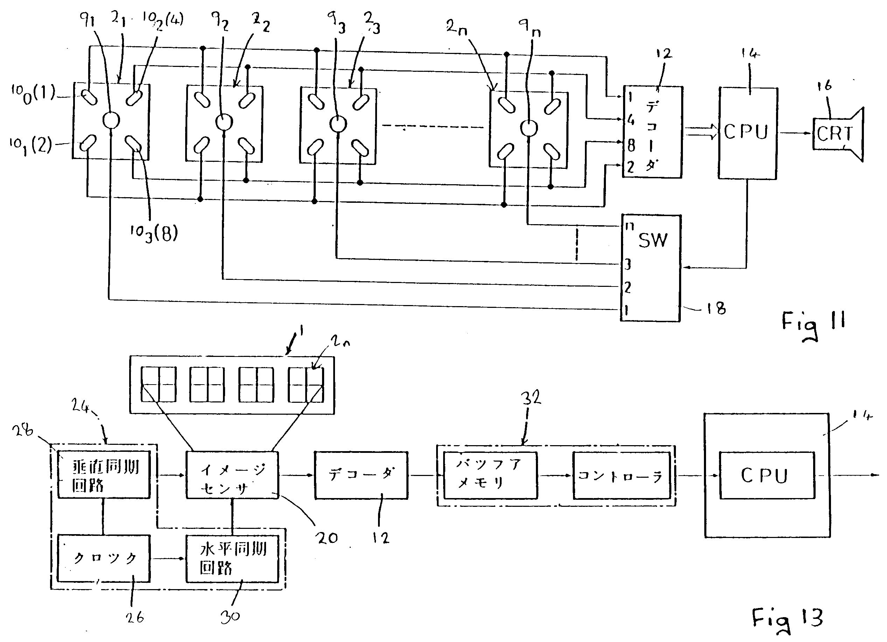

Figures 10 to 13 illustrate a data code printed on a sheet 1 and apparatus for reading said data code. Referring to figure 10 and 11, the apparatus 8 illuminates each unit of the data code using a light source 9, such as an LED lamp or a laser beam. The reflected light is received by respective photoreceptors 10, such as a Mos-type sensor or CDD. The photoreceptors 10 are coupled to a decoder 12 having input terminals 1, 2, 4, 8 corresponding to each photoreceptor 10 for the appropriate region 4. The input signals are extracted in binary column order and sent to a CPU 14 for displaying or converting the digital signals into the apropriate numbers, characters or symbols for a suitable display 16.

The photoreceptors 10 are responsive to the variations in the regions since less light is reflected back from a shaded region. The photoreceptors will record the binary number 1 in response to the light received from a shaded region and the binary number 0 in response to the light being received from a blank region. In conjunction with each region representing a column of binary notion, the apparatus 8 can read directly from the data code, the binary numbers, thereby obviating any analogue to digital conversion. Each unit 2 is illuminated by the light source 9 controlled by a switch 18 which illuminates each unit 2 in turn. This enables the photoreceptors 10 to submit signals in succession.

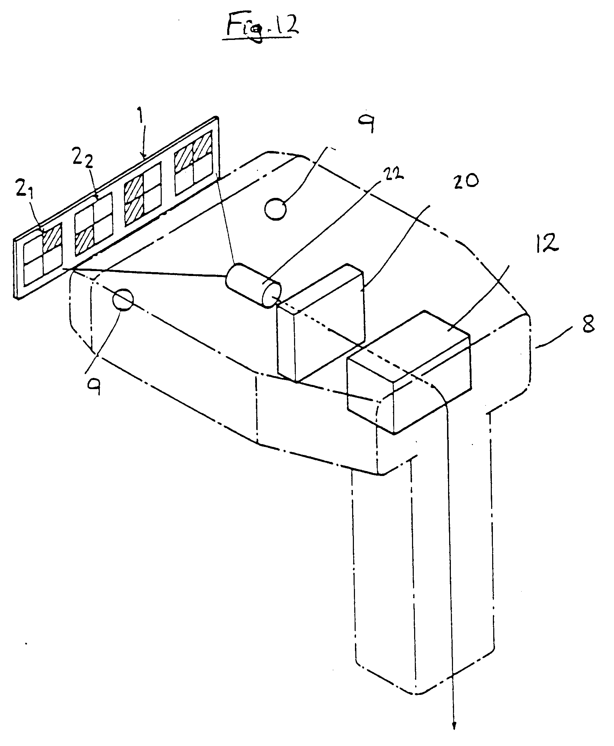

Alternatively, as shown in figure 12 and 13, the signals from the illuminated data code, may be received by an image sensor 20 via an optical system 22, the sensor 20 comprises two or more photoreceptors 10 in a two dimensional array. The sensor produces a signal which is outputted in a time series and stored in a memory 32. The stored data is displayed sequentially to reveal the data code. Circuit 24 shown in figure 13 enables the signals to be co-ordinated and comprises a clock 26, a vertical syncronising circuit 28 and a horizontal syncronising circuit 30. Each signal received at the terminals 1, 2, 4 and 8 of the decoder 12 is sent to the CPU 34 via the buffer memory and control unit 32.

These reading methods enable the system to avoid analogue to digital conversion as required by the prior art systems.

The foregoing description has been given by way of example only, and it will be appreciated by persons skilled in the art that modifications may be made without departing from the scope of the present invention as defined by the claims.

## Claims

1. A data code on a code sheet comprising at least one unit (2), the or each unit being divided into regions (4, 4a, 4b, ...) having similar dimensions, the areas of the regions combining to constitute the area of the unit or units, and one such unit having at least four such regions, characterized in that each region corresponds to a different column of binary notation commencing with the lowest order column and thereafter the successive columns, the same region of the code always being representative of the same binary column in one-to-one correspondence, and each unit having a particular arrangement of shaded regions so that the code represents directly a particular binary number; said data code further comprising orientation means (6) for distinguishing the orientation of said data code comprising a shaded bar dissecting the or each unit into two parts having two regions each.

2. A data code as claimed in Claim 1, in which the or each unit with at least four regions comprises a square having four regions, each of which regions comprising a square.

3. A data code as claimed in Claim 1, in which each region comprises any one of a rectangle, circle or triangle.

4. A data code as claimed in any one of the preceding claims in which the numeric value of each region is printed thereon.

5. Apparatus for reading a data code according to any preceding claim, comprising means (9) for illuminating the data code, an image sensor (20) comprising an optical system coupled to an array of photoreceptors for receiving the illumination from the data code and for producing a signal dependent upon the illumination received; characterized by means (32) for storing said signal and display means (14, 16) for sequentially displaying said signal.

6. Apparatus as claimed in Claim 5, further comprising a switch (18) coupled to the illuminating means (9) for enabling the regions to be read sequentially.

7. Apparatus as claimed in Claim 5 or 6, in which the array of photoreceptors is a two-dimensional array.

8. An apparatus as claimed in Claim 5, further comprising means (24) for co-ordinating the signals produced by said image sensor.

**Patentansprüche**

1. Datencode auf einem Codeblatt mit mindestens einer Einheit (2), wobei die oder jede Einheit in Bereiche (4, 4a, 4b, ...) mit gleichen Abmessungen eingeteilt ist, wobei die Flächen der Bereiche gemeinsam die Fläche der Einheit oder Einheiten bilden und eine solche Einheit mindestens vier solche Bereiche hat, dadurch gekennzeichnet, daß jeder Bereich einer anderen Spalte der Binärschreibweise entspricht, die mit der Spalte der niedrigsten Ordnung beginnt und sich dann mit den nachfolgenden Spalten fortsetzt, wobei der gleiche Bereich des Codes immer die gleiche Binärspalte in einer 1:1-Entsprechung darstellt und jede Einheit eine bestimmte Anordnung von schattierten Bereichen aufweist, so daß der Code direkt eine bestimmte Binärzahl darstellt; wobei der Datencode ferner eine Ausrichtungseinrichtung (6) zum Unterscheiden der Ausrichtung des Datencodes aufweist, die einen schattierten Balken aufweist, der die oder jede Einheit in zwei Teile mit jeweils zwei Bereichen trennt.

2. Datencode nach Anspruch 1, bei dem die oder jede Einheit mit mindestens vier Bereichen ein Quadrat mit vier Bereichen aufweist, wobei jeder der Bereiche ein Quadrat aufweist.

3. Datencode nach Anspruch 1, wobei jeder Bereich irgendeines, nämlich ein Rechteck, einen Kreis oder ein Dreieck aufweist.

4. Datencode nach einem der vorhergehenden Ansprüche, wobei der numerische Wert jedes Bereichs aufgedruckt ist.

5. Vorrichtung zum Lesen eines Datencodes nach einem der vorhergehenden Ansprüche mit einer Einrichtung (9) zum Anleuchten des Datencodes, einem Bildsensor (20) mit einem optischen System, das mit einer Anordnung von Fotorezeptoren zum Empfangen der Beleuchtung vom Datencode und zum Erzeugen eines Signals in Abhängigkeit von der empfangenen Beleuchtung aufweist; gekennzeichnet durch eine Einrichtung (32) zum Speichern des Signals und eine Anzeigeeinrichtung (14, 16) zum aufeinanderfolgenden Anzeigen des Signals.

6. Vorrichtung nach Anspruch 5, ferner mit einem Schalter (18), der mit der Beleuchtungseinrichtung (9) gekoppelt ist, damit die Bereiche nacheinander gelesen werden können.

7. Vorrichtung nach Anspruch 5 oder 6, wobei die Anordnung von Fotorezeptoren eine zweidimensionale Anordnung ist.

8. Vorrichtung nach Anspruch 5, ferner mit einer Einrichtung (24) zum Koordinieren der Signale, die von dem Bildsensor erzeugt werden.

**Revendications**

1. Code de données sur une feuille de code comprenant au moins une unité (2), l'unité ou chaque unité étant divisée en régions (4, 4a, 4b, ...) présentant des dimensions similaires, les zones des régions se combinant pour constituer la zone de l'unité ou des unités, et une telle unité comportant au moins quatre de ces régions, caractérisé en ce que chaque région correspond à une colonne différente de notation binaire commençant par la colonne d'ordre inférieur puis se poursuivant par les colonnes successives, la même région du code étant toujours représentative de la même colonne binaire selon une correspondance biunivoque et chaque unité présentant un agencement particulier de régions ombrées de telle sorte que le code représente directement un nombre binaire particulier; ledit code de données comprenant en outre un moyen d'orientation (6) pour distinguer l'orientation dudit code de données comprenant une barre ombrée qui partage l'unité ou chaque unité en deux parties comprenant chacune deux régions.

2. Code de données selon la revendication 1, dans lequel l'unité ou chaque unité munie d'au moins quatre régions comprend un carré comportant quatre régions, chacune de ces régions comprenant un carré.

3. Code de données selon la revendication 1, dans lequel chaque région comprend une forme quelconque prise parmi un rectangle, un cercle et un triangle.

4.  Code de données selon l'une quelconque des revendications précédentes, dans lequel la valeur numérique de chaque région est imprimée dessus.

5.  Appareil pour lire un code de données selon l'une quelconque des revendications précédentes, comprenant un moyen (9) pour éclairer le code de données, un capteur d'image (20) comprenant un système optique couplé à un réseau de photorécepteurs pour recevoir l'éclairement provenant du code de données et pour produire un signal dépendant de l'éclairement reçu, caractérisé par un moyen (32) pour stocker ledit signal et par un moyen d'affichage (14. 16) pour afficher séquentiellement ledit signal.

6.  Appareil selon la revendication 5, comprenant en outre un commutateur (18) couplé au moyen d'éclairement (9) pour permettre aux régions d'être lues séquentiellement.

7.  Appareil selon l'une quelconque des revendications 5 ou 6, dans lequel le réseau de photorécepteurs est un réseau bidimensionnel.

8.  Appareil selon la revendication 5, comprenant en outre un moyen (24) pour coordonner les signaux produits par ledit capteur d'image.

| 0 | 1 | 2 | 3 | 4 | 5 | 6 | 7 | 8 | 9 | | | | | |
| 0 | 1 | 2 | 3 | 4 | 5 | 6 | 7 | 8 | 9 | A(10) | B(11) | C(12) | D(13) | E(14) |
| 0 | 1 | 10 | 11 | 100 | 101 | 110 | 111 | 1000 | 1001 | 1010 | 1011 | 1100 | 1101 | 1110 |

Fig 1

(a)

$2^0=1$ — — $2^2=4$
$2^1=2$ — — $2^3=8$

$2^4=16$ — — $2^6=64$
$2^5=32$ — — $2^7=128$

$2^{n-3}$ — — $2^{n-1}$
$2^{n-2}$ — — $2^n$

(b)

1 桁 — — 3 桁
2 桁 — — 4 桁

5 桁 — — 7 桁
6 桁 — — 8 桁

$n'-3$ 桁 — — $n'-1$ 桁
$n'-2$ 桁 — — $n'$ 桁

Fig 2

Fig 3

Fig 4

| | | | |
|---|---|---|---|
| A | | 1 1 1 1 | |
| B | 0 0 0 0 | 0 0 0 1 | |
| C | | 0 0 1 0 | |
| D | | 0 1 0 0 | |
| E | | 0 0 0 0 | |
| F | 0 0 0 1 | 0 0 0 1 | |
| G | | 0 0 1 0 | |
| H | | 0 1 0 0 | |
| I | | 0 0 0 0 | |
| J | | 0 0 0 1 | |
| K | 0 0 1 0 | 0 0 1 0 | |
| L | | 0 1 0 0 | |
| M | | 1 0 0 0 | |
| N | | 0 0 1 1 | |
| O | | 0 0 0 0 | |
| P | | 0 0 0 1 | |
| Q | 0 1 0 0 | 0 0 1 0 | |
| R | | 0 1 0 0 | |
| S | | 1 0 0 0 | |
| T | | 0 0 1 1 | |
| U | | 0 0 0 0 | |
| V | | 0 0 0 1 | |
| W | 1 0 0 0 | 0 0 1 0 | |
| X | | 0 1 0 0 | |
| Y | | 1 0 0 0 | |
| Z | | 0 0 1 1 | |

Fig 6

10

5a

5b

← 2

Fig 5

4

b

a

6

$\frac{a}{2}$

← 2

a

(A)     (B)     (C)     (D)

$\frac{a}{2}$          $\frac{a}{2}$

Fig 7

(b)

(c)

a

b

b

a+b(n-1)

1 | 4
2 | 8

θ°
θ°
θ°
θ°

Y

X

Fig 8

Fig 9

Fig.10

Fig 13

Fig 11

Fig.12